Europäisches Patentamt

European Patent Office

Office européen des brevets

(11) Veröffentlichungsnummer: **0 282 639**
**A2**

# EUROPÄISCHE PATENTANMELDUNG

(21) Anmeldenummer: 87115893.7

(22) Anmeldetag: 29.10.87

(51) Int. Cl.⁴ **G05D 1/02** , **A01B 69/00**

(30) Priorität: 14.03.87 DE 3708370

(43) Veröffentlichungstag der Anmeldung:
21.09.88 Patentblatt 88/38

(84) Benannte Vertragsstaaten:
DE FR GB NL

(71) Anmelder: **Kirchberger, Franz**
**Lichtenfelser Strasse 43**
**D-8623 Staffelstein(DE)**

(72) Erfinder: **Kirchberger, Franz**
**Lichtenfelser Strasse 43**
**D-8623 Staffelstein(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) Verfahren und Vorrichtung zur Steuerung landwirtschaftlicher Maschinen in Abhängigkeit von ihrem Ort auf einer zu bestellenden Fläche.

(57) Es wird vorgeschlagen, eine zu bestellende Fläche durch eine lineare Abwicklung auf einem Speichermedium abzubilden, wobei die Wegstrecke der linearen Abwicklung in Abschnitte unterteilt wird, denen jeweils eine Speicheradresse zur Eingabe von Sollwerten zur Steuerung der landwirtschaftlichen Maschine zugeordnet wird. In der Betriebsfahrt werden die an den Speicheradressen gespeicherten Sollwerte in Abhängigkeit von der zurückgelegten Wegstrecke zur Steuerung der landwirtschaftlichen Maschine abgerufen.

FIG.1

EP 0 282 639 A2

## Verfahren und Vorrichtung zur Steuerung landwirtschaftlicher Maschinen in Abhängigkeit von ihrem Ort auf einer zu bestellenden Fläche

Die Erfindung betrifft ein Verfahren und eine Vorrichtung zur Steuerung landwirtschaftlicher Maschinen in Abhängigkeit von ihrem Ort auf einer zu bestellenden Fläche.

Es ist bekannt, daß der Landwirt seine landwirtschaftliche Maschine nach den jeweiligen Geländeverhältnissen von Hand steuert. Beispielsweise wird er über Handsteuerung einen Pflug aus dem Erdboden heben, wenn er sich kurzfristig über steinigem Gelände auf der zu bestellenden Fläche befindet.

Mit der Erfindung soll nun ein Verfahren und eine Vorrichtung geschaffen werden, die eine automatische Steuerung einer landwirtschaftlichen Maschine in Abhängigkeit von ihrem Ort auf einer zu bestellenden Fläche gestatten.

Zur Lösung dieser Aufgabe wird ein Verfahren vorgeschlagen, daß dadurch gekennzeichnet ist, daß die zu bestellende Fläche in einem Eichvorgang durch eine lineare Abwicklung auf einem Speichermedium abgebildet wird, indem von einem vorgegebenen Ausgangspunkt an einem Rand der Fläche aus die auf mindestens einer vorgegebenen Fahrgasse bestimmter Breite bis zum vollständigen Bestreichen der Fläche zurückgelegte Wegstrecke auf dem Speichermedium aufgezeichnet wird, daß die Wegstrecke der linearen Abwicklung in Abschnitte unterteilt wird, denen jeweils eine Speicheradresse zur Eingabe von Sollwerten zur Steuerung der landwirtschaftlichen Maschine zugeordnet wird und daß nach dem Eichvorgang in der Betriebsfahrt die an den Speicheradressen gespeicherten Sollwerte in Abhängigkeit von der zurückgelegten Wegstrecke zur Steuerung der landwirtschaftlichen Maschine abgerufen werden.

Die erfindungsgemäße Vorrichtung zur Durchführung dieses Verfahrens umfaßt eine Einrichtung mit einem Speichermedium zur Abbildung der in einem Eichvorgang linear abgewickelten zu bestellenden Fläche sowie eine Einrichtung zur Unterteilung der gesamten Wegstrecke der linearen Abwicklung in Abschnitte, wobei diesen Abschnitten jeweils Speicheradressen zur Eingabe von Sollwerten zur Steuerung der landwirtschaftlichen Maschine zugeordnet sind, und - schließlich eine Einrichtung zum Abrufen der gespeicherten Sollwerte in Abhängigkeit von der zurückgelegten Wegstrecke zur Steuerung der landwirtschaftlichen Maschine in Betriebsfahrt nach dem Eichvorgang.

Die Erfindung erleichtert dem Landwirt erheblich die Arbeit, da er nicht mehr gezwungen ist, seine ganze Aufmerksamkeit auf die Steuerung der landwirtschaftlichen Maschine zu richten. Er kann, um beim obigen Beispiel zu bleiben, vor der Feldbestellung die Sollwerte für die Einstellung des Pfluges so bestimmen, daß der Pflug automatisch aus dem Erdreich ausgehoben wird, wenn er an eine steinige Fläche gelangt, und wieder in das Erdreich greift, wenn die steinige Fläche überfahren ist.

Selbstverständlich gilt das Gesagte nicht nur für eine Feldbestellung wie Pflügen, Walzen, Fräsen usw., sondern auch in Falle des Ausbringens von Dünger, Saatgut, Pflanzenschutzmittel u.dgl.; ja sogar zur Steuerung der Treibstoffzufuhr kann die Erfindung verwendet werden, wenn beispielsweise an einer bestimmten Stelle der zu bestellenden Feldes langsamer gefahren werden soll.

In vielen Fällen ist es vorteilhaft, wenn nicht nur eine Steuerung der landwirtschaftlichen Maschine sondern sogar eine Regelung der landwirtschaftlichen Maschine in einem geschlossenen Regelkreis erfolgen soll, während der Betriebsfahrt die an den Speicheradressen befindlichen Sollwerte mit den jeweiligen zugehörigen Istwerten, die während der Betriebsfahrt erfaßt werden, verglichen werden und die landwirtschaftliche Maschine in Abhängigkeit von dem Vergleichswert gesteuert wird.

Die erfindungsgemäße Vorrichtung umfaßt hierzu eine Einrichtung zur Erfassung der Istwerte sowie eine Vergleichseinrichtung zum Vergleich der Soll-und Istwerte.

Um beim obigen Beispiel zu bleiben, ist damit nun sichergestellt, daß die Pflugtiefe tatsächlich auch den gewünschten Sollwert erreicht. Störfaktoren können auf diese Weise ausgeschaltet werden.

Die Fahrgasse kann beispielsweise spiralförmig von außen nach innen verlaufen, wie dies beispielsweise bei Mähmaschinen günstig ist, bei denen ein Messerbalken nur auf einer Seite der Maschine angeordnet ist, so daß eine Asymmetrie gegeben ist. Weist jedoch das zu bestellende Feld, wie in den meisten Fällen, mehrere zueinander parallele vorgegebene Fahrgassen auf, an deren Enden, abgesehen vom Anfangspunkt und dem Endpunkt, Wendemanöver stattzufinden haben, so ist es zweckmäßig, wenn beim Eichen die Wendepunkte auf der gespeicherten linearen Abbildung markiert und in der Betriebsfahrt zur Abschaltung des Betriebs der landwirtschaftlichen Maschine während des Wendemanövers abgerufen werden.

In der erfindungsgemäßen Vorrichtung sind in diesem Falle den Wendepunkten in der linearen Abwicklung Speicheradressen zugeordnet, an denen die Steuersignale zur Abschaltung des Betriebs der landwirtschaftlichen Maschine gespeichert sind.

In diesem Falle ist es vorteilhaft, wenn in kurzen Abständen vor und nach den Wendepunkten sowie nach dem Anfangspunkt der ersten Fahrgasse und vor dem Endpunkt der letzten Fahrgasse Speicheradressen in der linearen Abwicklung des zu bestellenden Feldes auf dem Speichermedium zur Abschaltung des Betriebs der landwirtschaftlichen Maschine und gegebenenfalls zusätzlich zur Drosselung der Fahrgeschwindigkeit bzw. zur Erhöhrung der Fahrgeschwindigkeit nach dem Wendemanöver vorgesehen werden.

Ferner ist es vorteilhaft, wenn in der Betriebsfahrt die Enden einer jeden Fahrgasse - zwischen dem Anfangspunkt und dem Endpunkt der insgesamt zurückzulegenden Wegstrecke durch Erfassung der Wendemanöver - ermittelt werden und daß an den Enden der Fahrgassen die zurückgelegte Fahrstrecke durch Vergleich mit dem zwischen den Enden einer Fahrgasse liegenden geeichten Streckenabschnitten korrigiert wird. Auf diese Weise kann der sich mit der Zeit ändernde Schlupf der Antriebsfeder bzw. des Wegstreckenmeßrades auf dem zu bestellenden Feld berücksichtigt und damit die Genauigkeit der Steuerung erhöht werden.

Im Zusammenhang mit der zuvor genannten Verbesserung des erfindungsgemäßen Verfahrens ist es zweckmäßig, den Wegstreckeneichfaktor für jede Fahrgasse einzeln zu bestimmen und für die jeweils folgende Fahrgasse fortzuschreiben, anstatt nur laufend eine Korrektur an den Enden der Fahrgasse vorzunehmen ohne Fortschreibung des Eichfaktors.

Dabei wird die Genauigkeit weiterhin erheblich erhöht, wenn eine Trennung der Wegstreckeneichfaktoren zwischen Hin-und Herfahrt vorgenommen wird, was beispielsweise besonders bei am Hang liegenden zu bestellenden Flächen von großem Vorteil ist, da ja der Schlupf bergab sich deutlich vom Schlupf bergauf unterscheidet.

Es kommt vor, daß das zu bestellende Feld so groß ist, daß beispielsweise bei Abgabe von Kultiviergut die Menge des verfügbaren Kultiviergutes nicht für das gesamte zu bestellende Feld ausreicht. In diesem Falle muß die Feldbestellung unterbrochen werden, um Kultiviergut nachzufassen. In diesem Zusammenhang ist ein schnelles Auffinden eines bestimmten Ortes auf der zur bestellenden Fläche von großem Interesse. Hierzu wird erfindungsgemäß vorgeschlagen, von einem als Meßpunkt dienenden Endpunkt einer Fahrgasse auszugehen, die auf beliebigem Wege (vorzugsweise möglichst kurzem Wege) zurückgelegte Wegstrecke und zusätzlich die jeweilige Fahrtrichtung der landwirtschaftlichen Maschinen (zumindest soweit die landwirtschaftliche Maschine noch nicht die Zielfahrgasse erreicht hat) zu erfassen und daraus den Ort der landwirtschaftlichen Maschine auf der gespeicherten linearen Abwicklung der zu bestellenden Fläche zu berechnen und anzuzeigen.

Besonders einfach ist es, wenn nach Eingabe eines beliebigen Ortes auf der linearen Abwicklung der zu bestellenden Fläche einer oder beide Endpunkte der Fahrgasse angezeigt werden, innerhalb welcher der aufzusuchende Ort liegt. Es muß dann nurmehr der fragliche Endpunkt der Fahrgasse angesteuert und die gewählte Fahrgasse bis zum Erreichen des Ortes, der ja angezeigt wird, abgefahren werden.

Die Erfindung wird nun anhand der beiliegenden Zeichnung näher erläutert. In der Zeichnung stellen dar:

Fig. 1 schematisch beispielhaft eine zu bstellende Fläche,

Fig. 2 die lineare Abwicklung der Fläche,

Fig. 3 eine Anzeigetafel für die relevanten Werte bei der Bestellung der Fläche.

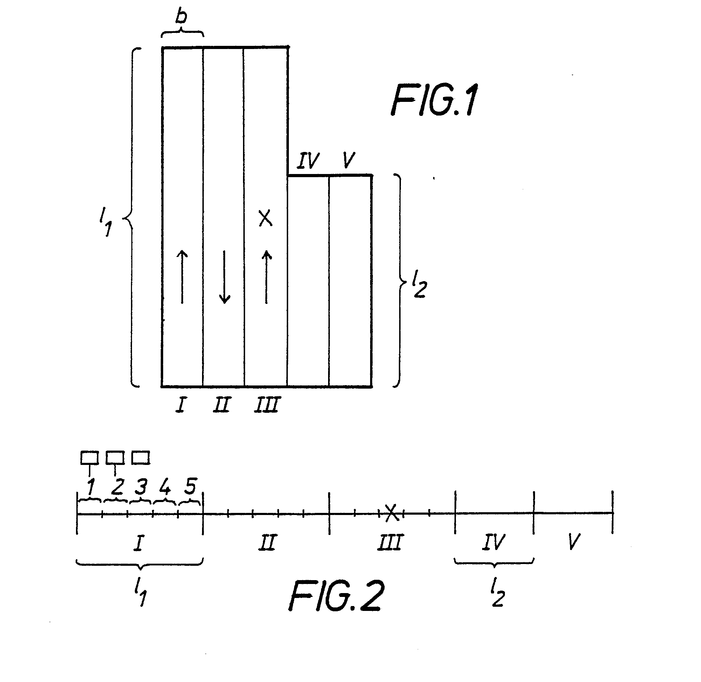

Eine zu bestellende Fläche ist nach Figur 1 vorzugsweise ausgehend von einem Endpunkt in zueinander parallele Fahrgassen I bis V mit einer bestimmten Breite b aufgeteilt. Hier sei gleich zu Anfang erwähnt, daß die Ränder der Fläche auch gekrümmt verlaufen können. Wie man aus Fig. 1 weiter entnimmt ist, $l_1$ die Länge der Fahrgassen I bis III, während $l_2$ die Länge der Fahrgassen IV und V ist. Die Pfeile deuten an, wie das Feld bei der Bestellung abgefahren werden kann. Zwischen den benachbarten Fahrgassen müssen beim Abfahren des Feldes Wendemanöver durchgeführt werden.

Da Feld kann nun linear abgewickelt werden, d.h. die gesamte zurückzulegende Fahrstrecke wird wie in Fig. 2 veranschaulicht aufgezeichnet. Dabei werden die Endpunkte der Fahrgassen markiert. Die gesamte zurückzulegende Wegstrecke wird außerdem in Abschnitte 1, 2, 3 ... unterteilt. Diesen Abschnitten wird jeweils ein Speicherplatz bzw. Speicheradresse zugeordnet, die in Fig. 2 mit rechteckigen Kästchen veranschaulicht sind. An diesen Speicherplätzen befinden sich die jeweiligen Sollwerte für die landwirtschaftlich interessanten Größen.

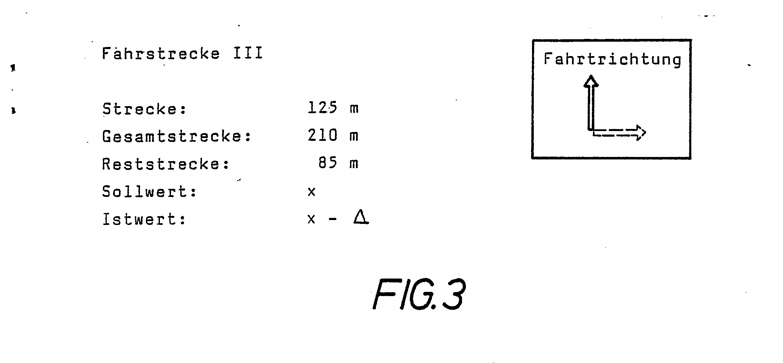

In Fig. 3 ist beispielhaft eine Anzeigetafel gezeigt, die die relevanten Werte anzeigt. 

Ist einmal die lineare Abwicklung des Feldes, wie in Fig. 2 veranschaulicht ist, in einem Bordcomputer eingegeben, so kann mit Hilfe der Werte in den Speicherplätzen die landwirtschaftliche Maschine gesteuert werden. Dabei muß während einer Betriebsfahrt natürlich die zurückgelegte Wegstrecke erfaßt und mit der gespeicherten Wegstrecke verglichen werden, wobei in jedem Streckenabschnitt der auf dem zugehöri gen Speicherplatz befindliche Sollwert zur Steuerung der landwirtschaftlichen Maschine abgerufen werden muß. Wird auch der momentane Istwert erfaßt, so ist sogar eine Regelung der landwirtschaftlichen Maschine möglich.

Es ist auch möglich, mit Hilfe des Bordcomputers jeweils die noch zurückzulegende Restwegstrecke zu ermitteln und zur Anzeige zu bringen. Diese Restwegstrecke kann beispielsweise bei Abgabe von Kultiviergut mit der noch zur Verfügung stehende Menge an Kultiviergut in Beziehung gesetzt werden, um zu bestimmten, ob noch genügend Kultiviergut zur Verfügung steht. Mit Hilfe des Bordcomputers kann laufend berechnet werden, bis zu welcher Wegstrecke das Kultiviergut reicht, und es kann angezeigt oder ermittelt werden, in welcher Fahrgasse das Kultiviergut droht auszugehen, wobei der in Fahrtrichtung davorliegende Endpunkt der Fahrgasse angezeigt wird, so daß ein Ausstieg aus der Feldbestellung nicht innerhalb einer Fahrgasse sondern am Ende einer Fahrgasse günstigerweise vorgenommen wird.

Es ist auch vorteilhaft, die Endpunkte einer Fahrgasse bei einer Betriebsfahrt zu erfassen, in dem das Wendemanöver festgestellt wird. Dies geschieht mit geeigneten Fahrtrichtungssensoren. Werden die Endpunkte der Fahrgassen während der Betriebsfahrt erfaßt, so kann die während der Betriebsfahrt gemessene Wegstrecke an den Enden der Fahrgassen mit den geeichten Streckenwerten verglichen und die Meßstrecke kann laufend korrigiert werden. In einer besonderen Ausführungsform wird der Eichfaktor, der beispielsweise für eine Fahrgasse ermittelt wurde, für die nächste fortgeschrieben. Sollte sich die zu bestellende Fläche auf einem Hang befinden, dann ist es besonders zweckmäßig, zwischen Hin-und Herfahrt zu unterscheiden und den unterschiedlichen Schlupf zu erfassen, wobei der Eichfaktor jeweils für die übernächste Fahrgasse fortgeschrieben wird.

Die Anzeigetafel in Fig. 3 zeigt auch eine Fahrtrichtungsanzeige, mit der angezeigt wird, wie der Fahrer der landwirtschaftlichen Maschine fahren soll, um einen bestimmten Ort auf dem Feld, der zuvor in den Bordcomputer eingegeben wurde, auf kürzest möglichem Wege zu erreichen. Zu diesem Zwecke wird die Fahrtrichtungsanzeige in zwei zueinander senkrecht stehende Komponenten aufgeteilt, von denen der eine einen Rand des Feldes wiedergibt, während der andere die dazu senkrechte Richtung (nämlich die Richtung der Fahrgasse) wiedergibt. So lange nur die eine Komponente angezeigt wird, hat der Fahrer vom Meßpunkt aus entlang dem Feldrand zu fahren, bis er die Zielfahrgasse, in der der gesuchte Ort liegt, erreicht. Dann erlischt die Anzeige der einen Komponente und die andere Komponente der Fahrtrichtungsanzeige wird wiedergegeben, so daß der Fahrer weiß, daß er nunmehr in der Zielfahrgasse ist. Er braucht dann nurmehr auf die zurückgelegte Wegstrecke zu achten, um den gewünschten Ort zu erreichen.

Der Bordcomputer kann eine Funkstelle aufweisen, die von einer grafikfähigen EDV-Anlage versorgt werden kann. Eine solche grafikfähige EDV-Anlage, die im landwirtschaftlichen Anwesen installiert sein kann, wird zum Erstellen des Programmablaufes für die Feldbestellung herangezogen. Sie weist vorzugsweise eine zweidimensionale flächenorientierte Bedieneroberfläche auf, auf der das zu bestellende Feld abgebildet werden kann und in die mit Hilfe eines Digitizier oder einer Maus die gewünschten Sollwerte eingegeben werden können. Eine solche Schnittstelle im Bordcomputer kann also ganz erheblich das Erstellen eines Programms für die Maschinensteuerung erleichtern.

**Ansprüche**

1. Verfahren zur Steuerung landwirtschaftlicher Maschinen in Abhängigkeit von ihrem Ort auf einer zu bestellenden Fläche,
**dadurch gekennzeichnet,**
daß die zu bestellende Fläche in einem Eichvorgang durch eine lineare Abwicklung auf einem Speichermedium abgebildet wird, indem von einem vorgegebenen Ausgangspunkt an einem Rand der Fläche aus die auf mindestens einer vorgegebenen Fahrgasse bestimmter Breite bis zum vollständigen Bestreichen der Fläche zurückgelegte Wegstrecke auf dem Speichermedium aufgezeichnet wird, daß die Wegstrecke der linearen Abwicklung in Abschnitte unterteilt wird, denen jeweils eine Speicheradresse zur Eingabe von Sollwerten zur Steuerung der landwirt schaftlichen Maschine zugeordnet wird und daß nach dem Eichvorgang in der Betriebsfahrt die an den Speicheradressen gespeicherten Sollwerte in Abhängigkeit von der zurückgelegten Wegstrecke zur Steuerung der landwirtschaftlichen Maschine abgerufen werden.

2. Verfahren nach Anspruch 1,
**dadurch gekennzeichnet,**
daß während der Betriebsfahrt die an den Speicheradressen befindlichen Sollwerte mit den jeweiligen zugehörigen Istwerten, die während der Betriebsfahrt erfaßt werden, verglichen werden und die landwirtschaftliche Maschine in Abhängigkeit von dem Vergleichswert gesteuert wird.

3. Verfahren nach Anspruch 1 oder 2, wobei das zu bestellende Feld mehrere zueinander parallele vorgegebene Fahrgassen aufweist, an deren Enden abgesehen vom Anfangs-und dem Endpunkt Wendemanöver stattzufinden haben,

**dadurch gekennzeichnet,**

daß beim Eichen die Wendepunkte auf der gespeicherten linearen Abbildung markiert und in der Betriebsfahrt zur Abschaltung des Betriebs der landwirtschaftlichen Maschine während des Wendemanövers abgerufen werden.

4. Verfahren nach Anspruch 3,

**dadurch gekennzeichnet,**

daß in kurzen Abständen vor und nach den Wendepunkten sowie nach dem Anfangspunkt der ersten Fahrgasse und vor dem Endpunkt der letzten Fahrgasse Speicheradressen in der linearen Abwicklung des zu bestellenden Feldes auf dem Speichermedium zur Abschaltung des Betriebs der landwirtschaftlichen Maschine und gegebenenfalls zusätzlich zur Drosselung der Fahrgeschwindigkeit bzw. zur Erhöhung der Fahrgeschwindigkeit nach dem Wendemanöver vorgesehen werden.

5. Verfahren nach Anspruch 3 oder 4,

**dadurch gekennzeichnet,**

daß in der Betriebsfahrt die Enden einer jeder Fahrgasse - zwischen dem Anfangs-und dem Endpunkt der insgesamt zurückzulegenden Wegstrecke durch Erfassung der Wendemanöver - ermittelt werden und daß jeweils an den Enden der Fahrgassen die zurückgelegte, in der Betriebsfahrt erfaßte Fahrstrecke durch Vergleich mit den zwischen den Enden einer Fahrgasse liegenden geeichten Streckenabschnitten korrigiert wird.

6. Verfahren nach Anspruch 5,

**dadurch gekennzeichnet,**

daß der Wegstreckeneichfaktor für jede Fahrgasse einzeln bestimmt und für die jeweils folgende Fahrgasse fortgeschrieben wird.

7. Verfahren nach Anspruch 6,

**dadurch gekennzeichnet,**

daß eine Trennung der Wegstreckeneichfaktoren zwischen Hin-und Herfahrt vorgenommen wird.

8. Verfahren nach einem der vorhergehenden Ansprüche,

**dadurch gekennzeichnet,**

daß zum schnellen Auffinden eines bestimmten Ortes auf der zu bestellenden Fläche von einem als Meßpunkt dienenden Endpunkt einer Fahrgasse ausgegangen, die auf beliebigem Wege zurückgelegte Wegstrecke und zusätzlich die jeweilige Fahrtrichtung der landwirtschaftlichen Maschine erfaßt und daraus der Ort der landwirtschaftlichen Maschine auf der gespeicherten linearen Abwicklung der zu bestellenden Fläche berechnet und angezeigt werden.

9. Verfahren nach Anspruch 8, dadurch gekennzeichnet, daß die Fahrtrichtungsanzeige vor Erreichen der Zielfahrgasse in senkrecht aufeinanderstehende Komponenten aufgeteilt und diese Komponenten angezeigt werden.

10. Verfahren nach einem der vorhergehenden Ansprüche,

**dadurch gekennzeichnet,**

daß nach Eingabe eines beliebigen Ortes auf der gespeicherten linearen Abwicklung der zu bestellenden Fläche einer oder beide Endpunkte der Fahrgasse angezeigt werden innerhalb welcher der aufzusuchende Ort liegt.

11. Verfahren nach einem der vorhergehenden Ansprüche,

**dadurch gekennzeichnet,**

daß in der Betriebsfahrt die noch zurückzulegende Restwegstrecke auf dem zu bestellenden Feld jeweils erfaßt und gegebenenfalls angezeigt wird.

12. Verfahren nach einem der vorhergehenden Ansprüche,

**dadurch gekennzeichnet,**

daß bei einer Steuerung in Verbindung mit einer während der Betriebsfahrt auf dem zu bestellenden Feld zu verbrauchenden Menge wie Kultiviergut oder Treibstoff die jeweilige Restmenge in der Betriebsfahrt erfaßt und in Beziehung zur jeweiligen Restwegstrecke gesetzt wird zur Anzeige des vor dem voraussichtlichen Aufbrauch liegenden letzten Endpunktes einer Fahrgasse, wobei vorzugsweise diese Anzeige in der Betriebsfahrt aktualisiert wird.

13. Vorrichtung zur Durchführung des erfindungsgemäßen Verfahrens,

**dadurch gekennzeichnet,**

daß eine Einrichtung mit einem Speichermedium zur Abbildung der in einem Eichvorgang linear abgewickelten zur bestellenden Fläche sowie eine Einrichtung zur Unterteilung der gesamten Wegstrecke der linearen Abwicklung in Abschnitte vorgesehen ist, wobei diesen Abschnitten jeweils Speicheradressen zur Eingabe von Sollwerten zur Steuerung der landwirtschaftlichen Maschine zugeordnet sind und daß ferner eine Einrichtung zum Abrufen der gespeicherten Sollwerte in Abhängigkeit von der zurückgelegten Wegstrecke zur Steuerung der landwirtschaftlichen Maschine in der Betriebsfahrt nach dem Eichvorgang vorgesehen ist.

14. Vorrichtung nach Anspruch 13,

**dadurch gekennzeichnet,**

daß eine Einrichtung zur Erfassung der Istwerte sowie eine Vergleichseinrichtung zum Vergleich der Soll-und Istwerte vorgesehen ist.

15. Vorrichtung nach Anspruch 13 oder 14,

**dadurch gekennzeichnet,**

daß den Wendepunkten in der linearen Abwicklung Speicheradressen zur Speicherung der Steuersignale zur Abschaltung des Betriebs der landwirtschaftlichen Maschine zugeordnet sind.

16. Vorrichtung nach einem der vorhergehenden Ansprüche,

**dadurch gekennzeichnet,**

daß ein Fahrtrichtungssensor zur Erfassung der Wendemanöver vorgesehen ist.

17. Vorrichtung nach einem der vorhergehenden Ansprüche,

**dadurch gekennzeichnet,**

daß sie eine Schnittstelle aufweist, die von einer grafikfähigen EDV-Anlage versorgt werden kann.

18. Vorrichtung nach Anspruch 17,

**dadurch gekennzeichnet,**

daß die grafikfähige Schnittstellenanlage dem Anwender zum Einstellen der Maschinensteuerung eine zweidimensionale flächenorientierte Bedieneroberfläche anbietet.

FIG.1

FIG.2

Fàhrstrecke III

| | |
|---|---|
| Strecke: | 125 m |
| Gesamtstrecke: | 210 m |
| Reststrecke: | 85 m |
| Sollwert: | x |
| Istwert: | x $-$ $\Delta$ |

Fahrtrichtung

# FIG.3